# EUROPEAN PATENT SPECIFICATION

(11) **EP 1 488 914 B1**
(45) Date of publication and mention of the grant of the patent: **06.09.2006**
(21) Application number: 04022540.1
(22) Date of filing: 21.11.2001
(51) Int. Cl.: B29D 30/72, B60C 9/20, B29D 30/20, B29D 30/60, B29D 30/36

(54) **Method for manufacturing pneumatic tire**
Verfahren zur Reifenherstellung
Procédé de fabrication d'un pneu

(30) Priority: 22.11.2000 JP 2000355449; 28.12.2000 JP 2000400918
(43) Date of publication of application: 22.12.2004
(62) Divisional of application: 01309801.7
(73) Proprietor: Bridgestone Corporation, Tokyo 104-0031 (JP)
(72) Inventor: Ogawa, Yuichiro c/o Bridgestone Corp. Tech. Center, Kodaira City Tokyo (JP); Iizuka, Shuhei c/o Bridgestone Corp. Techn. Center, Kodaira City Tokyo (JP)
(74) Representative: Whalley, Kevin

(56) References cited:
- EP-A- 0 747 207
- WO-A-98/54008
- DE-C- 19 718 699
- GB-A- 992 631
- US-A- 3 904 463
- US-A- 5 587 030
- US-A- 5 746 860

## Description

The present invention relates to a method for manufacturing a pneumatic tire, particularly a radial tire, which not only satisfies the requirements imposed on various tire constitutive elements in terms of shape and material, but also enables a highly precise formation thereof.

A conventional, widely adopted method for manufacturing pneumatic tires comprises formation of a green tire by winding various tire constitutive members, which are made of rubber materials and pre-molded in the foregoing step, around a shaping drum one over another in orderly fashion for adhesive joining; and deforming those tire constitutive members into respectively predetermined shapes.

With increased demand for high performance tires in recent years, the requirement for tire constitutive members became stronger and the shape of the members became complicated accordingly. When such tire constitutive members are wound around a tire shaping drum according to the conventional method, the precision with regard to the winding position tends to degrade, or irregularities tend to develop at the joints between different constitutive members wound around the tire shaping drum, because there may occur a significant difference in circumferential length between inner members and outer members both of which have a complicated form, and thus the uniformity and balance of the tire product may be impaired.

On the other hand, there is not infrequently a case where the tire constitutive members cannot be integrally formed into a unit to give a desired shape owing, for example, to the requirement imposed by the equipment of the preceding steps responsible for the pre-molding of those tire constitutive members. In such a case, the constitutive members are divided into a plurality of sub-units, which are separately pre-molded and assembled to give a tire with a desired shape. However, according to this method, the number of necessary units increases which in turn causes the number of steps introduced for winding constitutive members around a shaping drum and the number of joints observed on the shaping drum to increase. This not only lowers the efficiency in the formation of a green tire but also degrades the uniformity and balance of the tire.

Moreover, if a tire constitutive member has a laminated rubber structure composed of different rubber layers, the tire constitutive member pre-molded may have the risk of becoming unstable in its shape because of qualitative differences among those rubber layers. Attention is drawn to the disclosure of JP-2000-949101 (which reflects the prior art discussed above). Further reference is made to EP 0 747 207 A2 and US 5 587 030.

It is a primary object of the present invention to provide an improved method for manufacturing a pneumatic tire, which eliminates the above-mentioned problems of the prior art.

The present invention is addressed to a method for manufacturing a pneumatic tire provided with an insert ply comprising reinforcing cords which extend in a desired region including a bead portion and a sidewall portion of the tire, approximately in parallel with the tire circumference direction.

There is known a method for forming a green tire having insert plies in its tire side portions, comprising, during a shaping procedure, deforming the center portion of a cylindrical carcass band by emphatically expanding it; bringing its crown portion into intimate contact with the inner face of a belt tread band previously molded into a circular form for joining; and then attaching by adhesion an insert ply composed of reinforcing cords to both side portions of carcass band separated from each other with the crown portion inserted therebetween.

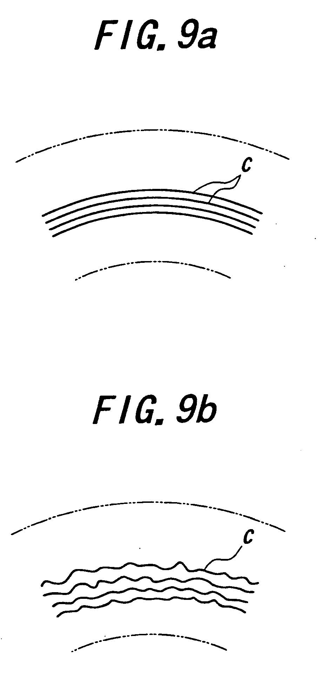

However, the green tire formed by such a method poses a number of problems. Since the green tire has a low restricting force against the reinforcing cords of insert ply, the reinforcing cords extending in parallel with the circumferential direction as shown in Fig 9a may lose their tension in association with the deformation or spill of a rubber substance which may occur during vulcanization of the green tire, or may be deformed so much as to take wavy courses and shown in Fig 9b; and thus may be difficult or even impossible to obtain a tire product after vulcanization where the reinforcing cords are given a desired tension as designed, that is, where the tire is shaped as designed.

It is therefore an object of the present invention to provide an improved method for manufacturing a pneumatic tire with insert plies, whereby reinforcing cords constituting an insert ply can be maintained at a desired position, so as to obtain a product tire with a desired shape as designed.

According to the present invention, there is provided a method for manufacturing a pneumatic tire including insert plies in its sidewall portions, wherein said insert plies are formed on an outer peripheral side of a carcass band, said method comprising the steps, for forming the green tire, of: radially outwardly expanding a widthwise center portion of a cylindrical carcass band having marginal portions to which bead rings are attached, by moving the bead rings axially toward each other; forming the insert plies by applying, on both side portions of the carcass band separated from each other with the center portion therebetween, reinforcing cords to extend in parallel with the circumferential direction; and enhancing a degree of radial expansion of the carcass band by further moving the beard rings axially toward each other, so as to increase a tension of the reinforcing cords and thereby bring an outer face of a resultant crown portion into contact with a belt and a tread for joining.

With the above-mentioned method according to the present invention, after application of the insert plies, both bead rings are further moved axially towards each other, i.e., the foot width of carcass band is further narrowed. Since the cross-section of the carcass band has a constant length, all the side portion having the insert ply attached thereto is further expanded/deformed outward in the radial direction and a force is thereby developed which causes the insert ply, or more accurately the reinforcing cords to elongate their radius; and thus the tension of the reinforcing cords is increased as compared with the tension existent immediately after their application.

The reinforcing cords whose tension has been increased satisfactorily withstand forces resulting from the deformation/spill of rubber substance which may occur during the vulcanization of the green tire, so as to effectively maintain their positions and shape as initially determined. Thanks to this feature, it is possible to obtain a product tire after vulcanization, where the tension of reinforcing forces and the shape of product tire are maintained as designed.

If a method is introduced whereby an insert ply is obtained by continuously winding round a reinforcing cord on a side portion of a carcass band in an approximately spiral form, the method is preferable as compared with a method wherein an insert ply is prepared in advance, because with the former method, the need for management and storage of an insert ply can be dispensed with, and the risk of the spiral form of an insert ply being inadvertently modified can be safely avoided.

A more preferred variant of the method according to the present invention comprises increasing the expansion degree of carcass band, thereby causing the reinforcing cords to be forcibly embedded into a coating rubber constituting the carcass band.

With the method according to the present invention, undesired displacement and/or deformation of reinforcing cords, which may arise during vulcanization of a green tire, can be more positively prevented because the reinforcing cords are not only subject to an enhanced tension, but also firmly entrapped by the coating rubber, or in a broader sense by the carcass band.

The present invention will be described below with reference to preferred embodiments shown in the accompanying drawings, wherein Figs. 1 to 5 relate embodiments falling outside the scope of the invention.

FIGS. 1a and 1b are schematic views showing the method of manufacturing a pneumatic tire not falling within the scope of the present invention.

FIG. 2 is a schematic view showing the method of manufacturing a pneumatic tire not falling within the scope of the present invention.

FIGS. 3a, 3b and 3c are schematic views showing the method of manufacturing a pneumatic tire not falling within the scope of the present invention.

FIG. 4 is a schematic view showing the method of manufacturing a pneumatic tire not falling within the scope of the present invention.

FIG. 5 is a schematic view showing the method of manufacturing a pneumatic tire not falling within the scope of the present invention.

FIGS. 6a and 6b are schematic views showing the method of manufacturing a pneumatic tire according to another embodiment of the present invention.

FIGS. 7 is a schematic view showing an example where a belt tread band is joined to a carcass.

FIGS. 8a and 8b are schematic views showing another example of the insert play.

FIGS. 9a and 9b are schematic views showing the reinforcing cords in a wavy state.

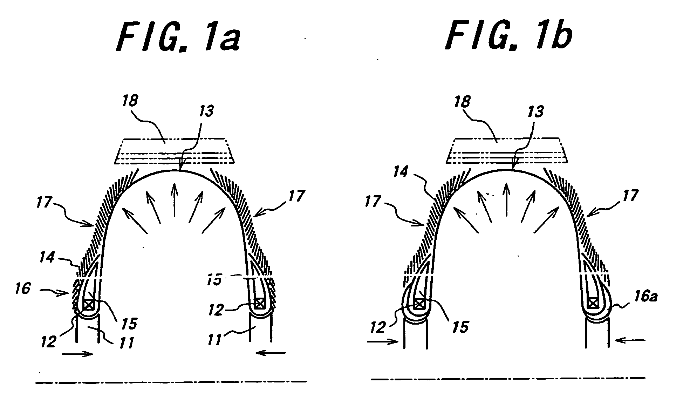

In the embodiments described with reference to Figs. 1 to 5 below, falling outside the scope of the invention, first of all, a carcass ply consisting of ply cords is applied to a carcass band drum in such a way as to cause the cords to extend in the circumferential direction of the drum, in order to deform the carcass ply into a cylindrical shape, thereby producing a carcass band. Then, for example, bead cores are attached to both marginal portions of this carcass band, and the marginal portions of carcass band are folded back around bead fillers and the bead cores.

With regard to the carcass band configured as above, while it is applied to the carcass band drum or to other means such as a formalizing means, both bead rocks 1 are diverged from each other to elongate the radius as shown in FIGS. 1a and 1b to be stabilized there; a pressurized gas is fed directly, or indirectly via a bladder, into the space surrounded by the inner face of carcass band 13, thereby causing the center portion of carcass band 13 to expand outward in the radial direction under a circumstance where both bead rocks, or more accurately both bead cores 12 are being converged towards each other; in the above state, an unvulcanized rubber strip 14 whose material and dimension are appropriately chosen and which is extruded, for example, from a nozzle of an extrusion machine, is applied on the outer peripheral surface of carcass band by being spirally wound round once or plural times thereupon in such a way as to cause a preceding turn to be superimposed at least partially by a succeeding turn within a desired range along a circular direction; and thereby a tire constitutive member generally having a desired shape and dimension is obtained.

FIG. 1a shows a case where a rubber chafer 16 and a sidewall 17 are obtained by this method, that is, by winding round respective strips such that one turn is superimposed by another to form a lamination, excepting a bead filler which is positioned adjacent to the outer peripheral surface of bead core 12. FIG. 1b shows a case where the sidewall 17 is obtained by winding round a strip while the rubber chafer 16a is obtained by a conventional method including application of a band by adhesion.

After necessary tire constitutive members are formed as above, for example, increasing the degree of deformation by expansion of the carcass band 13, and bringing the crown portion thereof into intimate contact with a belt tread band 18 (to be referred to as a "BT band" hereinafter) which has been pre-molded to give a definitive dimension in its external and internal diameters, results in the formation of a completed green tire.

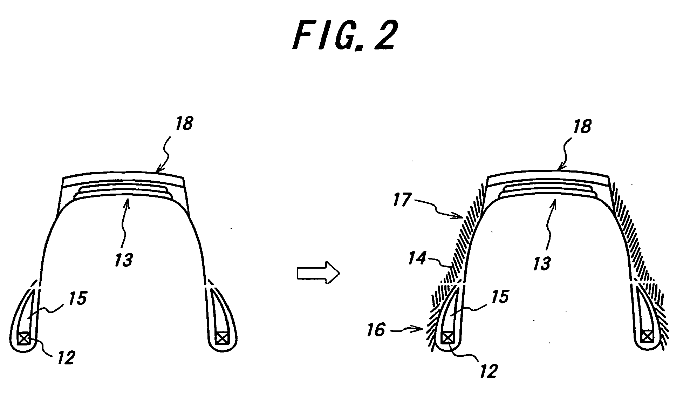

FIG. 2 shows a method whereby the center portion of carcass band 13 is intensively deformed by expansion to such an extent that the center portion comes in intimate contact with a BT band 18, before application of rubber chafer 16 and sidewall 17 to the carcass band is achieved by winding round respective unvulcanized rubber strips 14 thereupon. According to this method, the rubber chafer 16 and sidewall 17 are relieved of deformations associated with expansion which could otherwise occur if they were applied and then the expansion of the carcass band introduced. This will contribute to improve their shape and positioning precision.

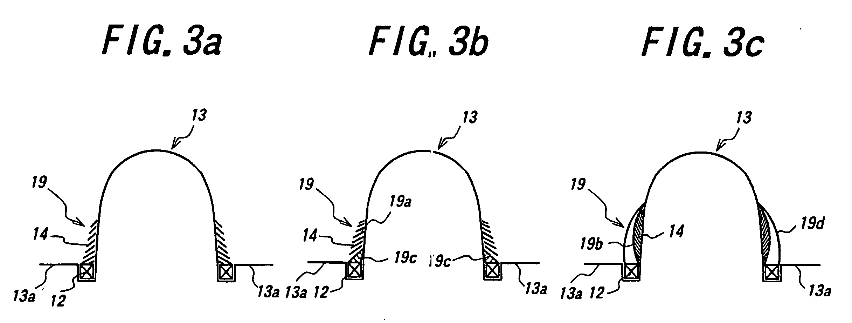

FIGS. 3a, 3b and 3c show an illustrative example where formation of a bead filler or a tire constitutive member is achieved by spirally winding round an unvulcanized rubber strip on the carcass band. FIG. 3a shows a case where formation of a bead filler 19 is achieved by winding round an unvulcanized rubber strip 14 on the outer peripheral portion close to a bead core 12, before the marginal portion 13a of carcass band 13 is folded back around the bead core 12.

In this case, the entire bead filler 19 may be made of one kind of rubber, or it may be made of two kinds of rubbers different, for example, in hardness or post-vulcanization properties.

FIGS. 3b and 3c show a case where, of a bead filler 19, a portion 19a located at a distal position and another portion 19b located at a proximal position in the radial direction are separately obtained by winding round respective unvulcanized rubber strips 14 while the remaining portions 19c and 19d are formed in advance by molding rubber materials the same or different with or from the above rubber materials into a desired shape.

According to any one of the above methods, if the marginal portion 13a of carcass band 13 is folded back around bead core 12, the bead filler 19 will be wrapped up together with bead core 12 into the marginal portion 13a.

The subsequent works may proceed according to the methods as discussed above with respect to FIGS. 1a, 1b or FIG. 2, or to the methods described later.

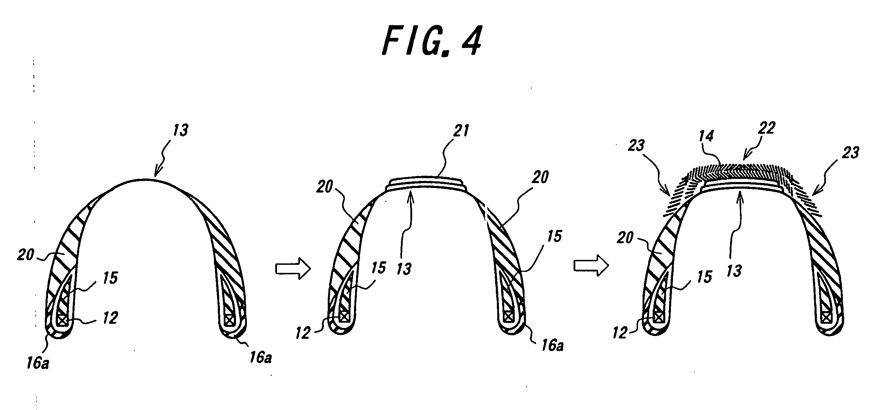

FIG. 4 shows a case where a bead filler 15, rubber chafer 16a and sidewall 20 all pre-molded are applied around a carcass band 13 by winding round those members thereupon to adhere thereto using a conventional technique; after the center portion of carcass band 13 is deformed by expansion until it is brought into intimate contact with the inner circular face of a belt layer ring 21 properly set in advance, an unvulcanized rubber strip 14 consisting of one or two kinds of rubber materials are applied to the outer peripheral face of the belt layer ring 21 by spirally winding round the rubber strip thereupon; and thus a tread 22 having a cap-base structure with conductive layers penetrating the cap and base in the radial direction is formed on the center portion of carcass band 23.

In this case, together with the formation of tread 22, formation of a mini-sidewall 23 for bridging the tread 22 and the sidewall 20 may be introduced by spirally winding round a strip on the relevant area. Alternatively, only the tread 22 may be formed. In the latter case, a pre-molded mini-sidewall may be added after the tread 22 has been formed.

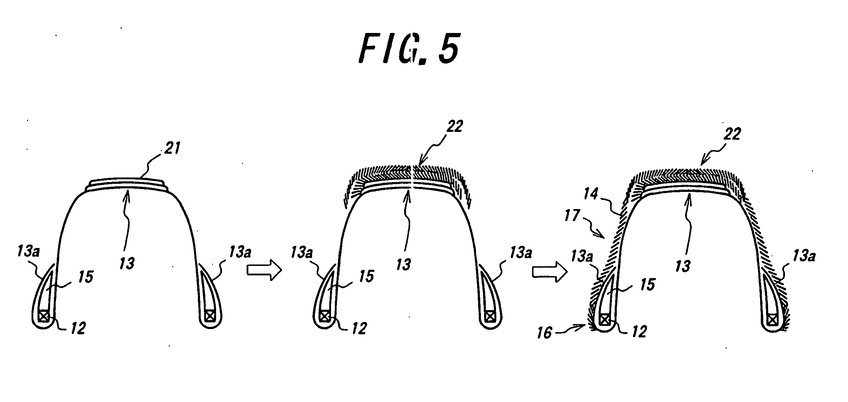

FIG. 5 shows a still further embodiment not falling within the scope of the invention where the center portion of a carcass band 13 is intensively deformed by expansion so as to be brought into intimate contact with a belt layer ring 21 while its folded-back marginal portion 13a contains a bead core 12 and bead filler 15 in its folded-back portion; a belt 22 is formed by the method described above with respect to FIG. 4; then a sidewall 17 and a rubber chafer 16 are formed by the method described above with respect to FIG. 1a.

In this embodiment, it is also possible to form sidewall 17 and rubber chafer 16 before the formation of tread 22.

The above embodiments have been described with reference to the accompanying figures. However, needless to say, they also apply to the manufacture of a so-called bead coreless tire. Further, the tire constitutive member may include a buffer rubber to be applied on the carcass ply, and a belt undercushion to be inserted between the belt layer and the carcass band, and a tread undercushion to be inserted between the tread and the belt.

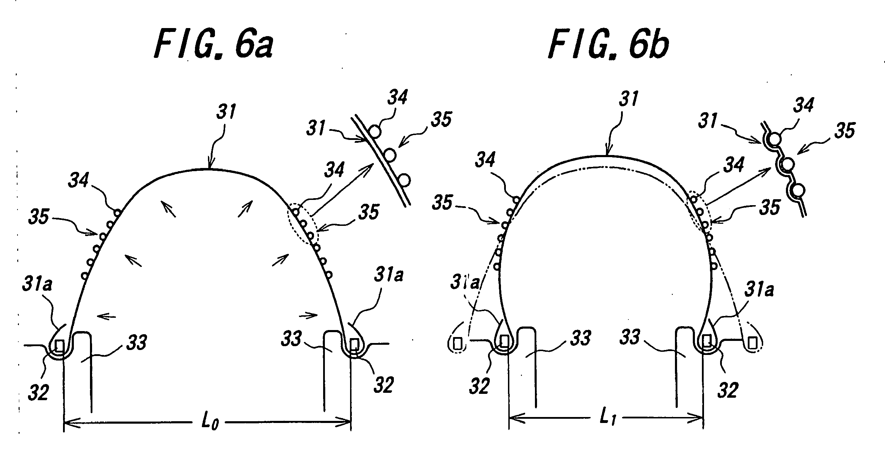

The present invention will be described below with reference to the embodiments shown in FIGS. 6a and 6b et seq., which are applied to manufacturing of pneumatic tires having insert plies embedded in the sidewall portions.

FIGS. 6a and 6b are schematic views representing an embodiment of the present invention. Specifically, they are sectional views of a green tire undergoing a shaping process whereby the center portion of a carcass band is deformed by expansion. The deformation is achieved by a so-called single stage forming wherein a shaping drum which also serves as a carcass band shaping drum is used, or by a so-called double stage forming wherein a shaping drum distinct from a carcass band shaping drum is used.

A carcass band 31 is obtained by molding an unvulcanized ply with a carcass band shaping drum, not shown, into a cylindrical shape; two marginal portions are folded back around their respective bead rings 32 placed close thereto together with their respective inner liners not illustrated here to form respective folded-back portions 31a; two bead rings 32, or more directly two bead rocks 33 which support the bead rings on their inner circumferences are converged towards each other; and a pressurized gas is blown directly, or indirectly via a bladder, into the internal space of carcass band 31, such that the center portion extending in the circumferential direction is deformed, being expanded outward in the radial direction.

In this particular embodiment, expansion/deformation of the carcass band 31 is temporarily withdrawn at a time point when the distance between the opposite bead rings reaches a predetermined value L0 as shown in FIG. 6a. Then, at this interim state, reinforcing cords 34, that is, organic fiber cords or metal cords are applied approximately circularly on both side portions separated from each other with the crown portion of carcass band 31 therebetween, or more preferably a cord is continuously applied on each of the side portions in a spiral form to form thereby an insert ply.

Then, the distance between the opposite bead rings are caused to take a smaller predetermined value L1 as shown in FIG. 6b. Given that the cross-section of carcass band 31 has a constant length, when the expansion/deformation degree of the entire side portion is enhanced; a force is developed which causes the reinforcing cords 34 of insert ply 35 to elongate their radius; and thus the tension of the reinforcing cords 34 is increased as compared with the counterpart observed immediately after their application.

Through this operation, it is possible to cause the reinforcing cords which simply adhere to the surface of a coating rubber of carcass band 31 immediately after their application as shown in FIG. 6a, to be buried into the substance of the coating rubber, or more preferably to be forcibly buried into the substance of the coating rubber, accompanied with distinct deformations of carcass band 1, or more accurately of carcass cords as shown in FIG. 6b.

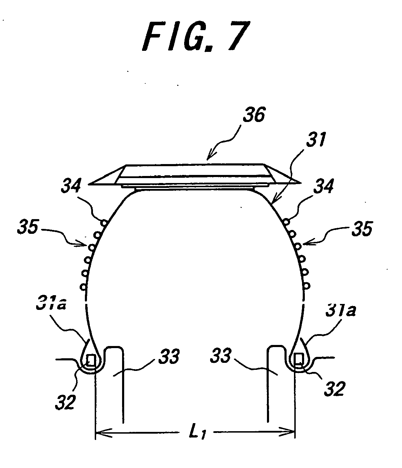

Further, with this embodiment, for example, a belt tread band 36 which has been formed on a belt tread band drum is properly positioned against the outer circumferential face of the crown portion of carcass band 31 to be fixed there as shown in FIG. 7, before the distance between the opposite bead rings is shortened to a predetermined value L1; and after the distance between the opposite beads has been shortened to a predetermined value L1, the crown portion of carcass band 31 is brought in contact with the inner face of belt tread band 36 for joining, and then firm adherence of the belt tread band 36 to the outer face of carcass band 31 is achieved by using a stitcher roll or the like.

The belt tread band 36 may be positioned against the outer face of a shaping drum, before the carcass band 1 is deformed by expansion as indicated in FIG. 6a, or after expansion/deformation as shown in FIG. 6a has been introduced but before formation of insert ply 35 is started.

A green tire having undergone a series of processes as described above, is subjected to successive steps generally known in the art, to complete the formation of green tire.

With a green tire formed as above, because it is possible to increase the tension of the reinforcing cords constituting the insert ply 35 as needed, or more preferably in addition to above feature. to restrict the reinforcing cords 34 to a desired position, even when the tire is vulcanized and molded in a vulcanizing mold, the reinforcing cords 34 will securely withstand forces which may develop as a result of the deformation or spill of rubber substance during the above process, to maintain the initial, desired position and shape, thereby allowing a tire product where the cord tension and shape are maintained as designed to be produced.

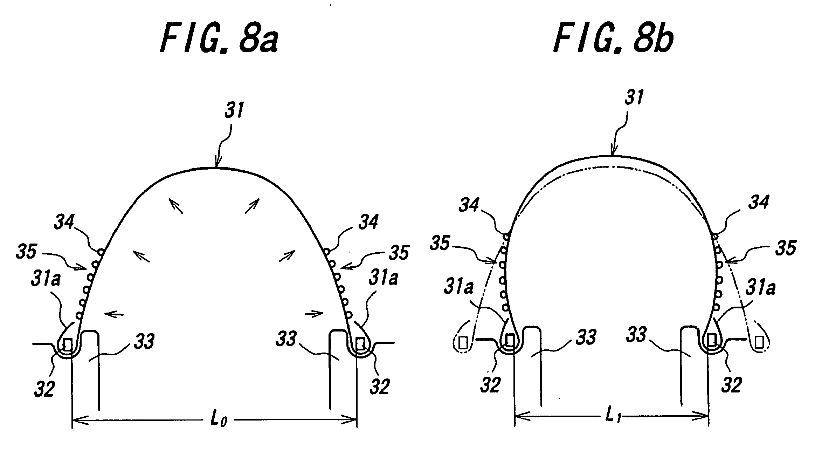

The above description has been given in relation to a case where the insert ply 35 is displaced considerably apart on the tire cross-section from the bead ring 32, but what has been described above similarly applies to a case where the insert ply is placed at a region close to the bead ring as shown in FIGS. 8a and 8b.

As discussed above, according to the present invention, it is possible to obtain a tire product where reinforcing cords are given a desired tension and the tire has a desired shape, by conferring a sufficiently high tension in accordance with a given requirement on the reinforcing cords constituting an insert ply prior to the vulcanization of the green tire, thereby preventing the reinforcing cords from being subject to displacements and/or deformations which otherwise could occur during vulcanization.

## Claims

1. A method for manufacturing a pneumatic tire including insert plies (35) in its sidewall portions, wherein said insert plies are formed on an outer peripheral side of a carcass band (31), said method comprising the steps, for forming a green tire, of:
radially outwardly expanding a widthwise center portion of a cylindrical carcass band (31) having marginal portions to which bead rings (32) are attached, by moving the bead rings axially toward each other;
forming the insert plies (35) by applying, on both side portions of the carcass band (31) separated from each other with the center portion therebetween, reinforcing cords (34) to extend in parallel with the circumferential direction; and
enhancing a degree of radial expansion of the carcass band (31) by further moving the bead rings (32) axially toward each other, so as to increase a tension of the reinforcing cords (34) and thereby bring an outer face of a resultant crown portion into contact with a belt and a tread for joining.

2. A method as claimed in claim 1, **characterized in that** the insert plies (35) are formed by continuously winding a reinforcing cord in a spiral form.

3. A method as claimed in claim 1 or 2, **characterized in that** the enhanced degree of expansion of the carcass band (31) causes the reinforcing cords (34) to be forcibly embedded into a coating rubber of the carcass band.

## Patentansprüche

1. Verfahren zur Herstellung eines Luftreifens mit Einsatzlagen (35) in seinen Seitenwandabschnitten, wobei die Einsatzlagen auf einer Außenperipherieseite eines Karkassenbandes (31) ausgebildet sind, wobei das Verfahren die folgenden Schritte zum Bilden eines Reifenrohlings beinhaltet:
radial auswärtiges Ausdehnen eines breitenmäßig mittleren Abschnitts eines zylindrischen Karkassenbands (31) mit Randabschnitten, an denen Wulstringe (32) angebracht werden, indem die Wulstringe axial zueinander hin bewegt werden;
Bilden der Einsatzlagen (35), indem auf beide Seitenabschnitte des Karkassenbandes (31), getrennt voneinander mit dem mittleren Abschnitt dazwischen, Verstärkungskorde (34) so aufgebracht werden, dass sie parallel zur Umfangsrichtung verlaufen, und
Erhöhen des Ausmaßes der radialen Ausdehnung des Karkassenbandes (31) durch Weiterbewegen der Wulstringe (32) axial zueinander hin, um eine Spannung der Verstärkungskorde (34) zu erhöhen und **dadurch** eine Außenfläche eines resultierenden Kronenabschnitts in Kontakt mit einem Gürtel und einer Lauffläche zwecks Zusammenfügen zu bringen.

2. Verfahren nach Anspruch 1, **dadurch gekennzeichnet, dass** die Einsatzlagen (35) durch kontinuierliches Wickeln eines Verstärkungskords in einer Spiralform gebildet werden.

3. Verfahren nach Anspruch 1 oder 2, **dadurch gekennzeichnet, dass** das erweiterte Ausmaß der Ausdehnung des Karkassenbandes (31) bewirkt, dass die Verstärkungskorde (34) zwangsweise in einen Beschichtungsgummi des Karkassenbandes eingebettet werden.

## Revendications

1. Procédé de fabrication d'un bandage pneumatique comprenant des plis d'insert (35) dans ses parties de flanc, dans lequel lesdits plis d'insert sont formés sur un côté périphérique extérieur d'une bande de carcasse (31), ledit procédé comprenant les étapes, pour la formation d'un pneumatique cru, consistant à:
faire croître radialement vers l'extérieur une partie centrale dans le sens de la largeur d'une bande de carcasse cylindrique (31) possédant des parties en marge auxquelles des tringles (32) sont attachées, en déplaçant axialement les tringles l'une en direction de l'autre;
former les plis d'insert (35) en appliquant, sur les deux parties latérales de la bande de carcasse (31) séparées l'une de l'autre par la partie centrale entre celles-ci, des câblés de renforcement (34) pour qu'ils s'étendent parallèlement à la direction circonférentielle; et
améliorer le degré d'expansion radiale de la bande de carcasse (31) en déplaçant davantage les tringles (32) axialement l'une vers l'autre, de manière à augmenter la tension des câblés de renforcement (34) et de cette manière à mettre une face extérieure de la partie de sommet résultante en contact avec une ceinture et une bande de roulement afin de les unir.

2. Procédé comme revendiqué dans la revendication 1, **caractérisé en ce que** les plis d'insert (35) sont formés en enroulant de manière continue un câblé de renforcement en une forme de spirale.

3. Procédé comme revendiqué dans la revendication 1 ou 2, **caractérisé en ce que** l'amélioration du degré d'expansion de la bande de carcasse (31) provoque l'enrobage de force des câblés de renforcement (34) dans la gomme de revêtement de la bande de carcasse.
